# EUROPÄISCHE PATENTSCHRIFT

(11) **EP 2 186 101 B1**
(45) Veröffentlichungstag und Bekanntmachung des Hinweises auf die Patenterteilung: **04.07.2012**
(21) Anmeldenummer: 08803908.6
(22) Anmeldetag: 09.09.2008
(51) Int. Cl.: H01G 4/30, H01G 4/008, H01G 4/232, H01C 7/18, H01C 1/148

(54) **VERFAHREN ZUR HERSTELLUNG EINES VIELSCHICHTBAUELEMENTS**
METHOD FOR PRODUCING A MULTI-LAYER COMPONENT
PROCÉDÉ DE FABRICATION D'UN COMPOSANT MULTICOUCHE

(30) Priorität: 10.09.2007 DE 102007043098
(43) Veröffentlichungstag der Anmeldung: 19.05.2010
(73) Patentinhaber: Epcos AG, 81669 München (DE)
(72) Erfinder: BISPLINGHOFF, Gerhard, A-8530 Deutschlandsberg (AT); PECINA, Axel, A-8543 St. Martin (AT)
(74) Vertreter: Epping - Hermann - Fischer
(86) Internationale Anmeldenummer: PCT/EP2008/061940
(87) Internationale Veröffentlichungsnummer: WO 2009/034082

(56) Entgegenhaltungen:
- EP-A- 0 716 054
- EP-A- 1 701 391
- DE-A1- 2 334 444
- DE-A1- 3 930 623
- US-A- 5 312 581

## Beschreibung

Die Erfindung betrifft ein Verfahren zur Herstellung eines Vielschichtbauelements.

Aus DE2334444 ist ein Verfahren bekannt, bei dem ein Stapel von Grünfolien mit aufgebrachten Innenelektroden auf Palladiumoxidbasis bereitgestellt und gesintert wird, wobei das Palladiumoxid zu metallischem Palladium zersetzt wird. Die Verwendung von Silberpaste zur bildung von Außenelektroden ist beispielsweise in US 5 312 581 beschreiben.

Eine zu lösende Aufgabe besteht darin, ein Vielschichtbauelement und das Verfahren zur Herstellung eines Vielschichtbauelements anzugeben, bei dem Verspannungen im Inneren des Vielschichtbauelements während der Produktion vermieden werden beziehungsweise minimiert werden.

Es wird ein Verfahren zur Herstellung eines. Vielschichtbauelements mit den merkmalen des Anspruchs 1 angegeben. Bei dem verfahren werden in einem ersten Verfahrensschritt Innenelektroden aus Palladiumoxid auf Grünfolien aufgebracht . Das Palladiumoxid wird mittels einer Paste auf die Grünfolien aufgebracht. Die Paste weist einen Feststoffanteil zwischen 30 % und 80 % auf. Der Feststoffanteil besteht vorzugsweise aus 100 % Palladiumoxid, der Anteil an Palladiumoxid kann aber auch geringer sein. Mehrere Grünfolien werden gestapelt und anschließend in einzelne Grünstapel zerteilt.

Die Stapel von Grünfolien mit aufbrachten Innenelektroden aus Palladiumoxid werden anschließend gesintert. Die gesinterten Stapel werden an zwei oder mehreren Seiten mit einer Silberpaste für Außenelektroden versehen, die in einem weiteren Temperaturschritt in die gesinterten Stapel eingebrannt werden.

Während des Sinterverfahrens wird das auf die Grünfolien aufgedruckte Palladiumoxid in Palladium umgewandelt. Während des Sinterverfahrens tritt ab ca. 800 °C eine Rückbildung des metallischen Palladiums ein, so dass das Palladiumoxid in metallisches Palladium umgewandelt wird. Da es während des Sinterverfahrens bedingt durch den Sinterprozess zu einer Volumenkontraktion kommt, die in etwa zeitgleich mit der Umwandlung von Palladiumoxid in Palladium stattfindet, können durch die Verwendung von Palladiumoxid als Elektrodenausgangsmaterial die Verspannungen der einzelnen Schichten während des Sinterverfahrens vermindert werden.

Palladiumoxid bleibt bis ca. 800 °C volumenstabil. Bei der Verwendung von metallischem, nicht oxidiertem Palladium als Elektrodenausgangsmaterial erfolgt während des Sinterverfahrens, also auch schon unter 800 °C, eine Volumenexpansion des Palladiums bei Oxidation des Palladiums zu Palladiumoxid, die während des Sinterverfahrens zu Verspannungen innerhalb der dielektrischen Schichten des Vielschichtbauelements führen.

Die für die Außenelektroden verwendete Silberpaste weist vorzugsweise einen Glasanteil auf. Der Glasanteil in der Silberpaste dient als Kleber zur Befestigung der Außenelektroden an dem gesinterten Grünstapel.

In einer bevorzugten Ausführungsform weist die Silberpaste einen Polymeranteil auf, der die Funktion eines Binders erfüllt.

Während des Einbrennens der Silberpaste diffundiert Silber aus den Außenelektroden in die Innenelektroden. Vorzugsweise diffundiert das Palladium aus den Innenelektroden während des Einbrennens der Silberpaste in die Außenelektroden.

Durch die silberhaltigen Außenelektroden entsteht somit ein Konzentrationsgradient, der zu einem Konzentrationsgefälle an Palladium in den Außenelektroden führt. Durch das Konzentrationsgefälle wird eine Diffusion des Palladiums der Innenelektroden in die silberhaltigen Außenelektroden begünstigt. Dadurch gelangt Palladium aus den Innenelektroden in die Außenelektroden. Der Konzentrationsüberschuss an Silber in den Außenelektroden führt in entgegen gesetzter Richtung zu einem Konzentrationsgefälle von Silber in Richtung der Innenelektroden. Diese Konzentrationsgefälle begünstigt daher eine Diffusion des Silbers aus den Außenelektroden in Randbereiche der Innenelektroden.

In einer bevorzugten Ausführungsform weisen die Innenelektroden des Vielschichtbauelements nach dem Sintern einen Palladiumanteil von 20 Gew.% auf.

Bevorzugt wird das zuvor beschriebene Verfahren unter anderem für NTCs, Varistoren, Kondensatoren, oder andere Vielschichtbauelemente verwendet.

Das beschriebene Verfahren wird anhand der folgenden Figur und Ausführungsbeispiels näher erläutert.

Die nachfolgend beschriebene Zeichnung ist nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.

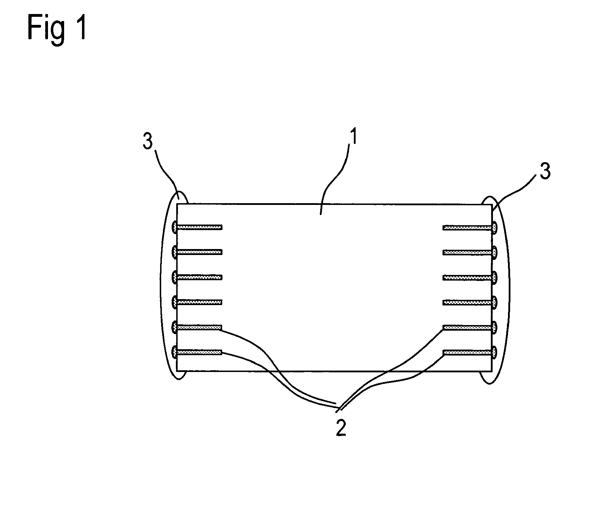

- Figur 1: zeigt eine Ausführungsform des Vielschichtbauelements, bei dem an dem gesinterten Vielschichtbauelement Außenelektroden eingebrannt sind.

In der Figur 1 ist eine Ausführungsform des Vielschichtbauelements gezeigt, bei dem an dem gesinterten Vielschichtbauelement 1 Außenelektroden 3 eingebrannt sind. Das Vielschichtbauelement 1 weist dielektrische Schichten auf, die mit Innenelektroden 2 versehen sind. Während des Sinterverfahrens wurde das Palladiumoxid, das auf Grünfolien aufgebracht worden ist, in Palladium umgewandelt. Durch das auf die Innenelektroden 2 aufgebrachte Palladiumoxid, das bis ca. 800 °C volumenstabil ist, werden Verspannungen im Vielschichtbauelement während des Sinterns verringert. Ab ca. 800 °C geht Palladiumoxid in metallisches Palladium über. Ab dieser Temperatur ist jedoch die Volumenkontraktion des Stapels der Grünfolien schon größtenteils abgeschlossen, so dass durch weitere Temperaturerhöhung keine weiteren Spannungen innerhalb des Vielschichtbauelements auftreten. Die Außenelektroden 3 enthalten Silber, das aufgrund des vorliegenden Konzentrationsgradienten in die Innenelektroden 2 eindiffundiert. Das Palladium der Innenelektroden diffundiert ebenfalls aufgrund des Konzentrationsgefälles zu den Außenelektroden in diese hinein.

Obwohl in den Ausführungsbeispielen nur eine beschränkte Anzahl möglicher Weiterbildung der Erfindung beschrieben werden konnte ist die Erfindung nicht auf diese beschränkt.

Die Erfindung ist nicht auf die Anzahl der dargestellten Elemente beschränkt.

Die Beschreibung der hier angegebenen Gegenstände ist nicht auf die einzelnen speziellen Ausführungsformen beschränkt vielmehr können die Merkmale der einzelnen Ausführungsformen soweit technisch sinnvoll beliebig miteinander kombiniert werden.

### Bezugszeichenliste

- 1: Vielschichtbauelemente
- 2: Innenelektrode
- 3: Außenelektrode

## Patentansprüche

1. Verfahren zur Herstellung eines Vielschichtbauelements (1), nach folgenden Verfahrenschritten:
- ein Stapel von Grünfolien mit aufgebrachten Innenelektroden (2) enthaltend Palladiumoxid wird bereitgestellt,
- der Stapel wird gesintert, wobei Palladiumoxid während des Sinterverfahrens in Palladium umgewandelt wird,
- der gesinterte Stapel wird an zwei oder mehreren Seiten mit einer Silberpaste für die Außenelektroden (3) versehen,
- und die Silberpaste wird in einem weiteren Temperaturschritt in die gesinterten Grünstapel eingebrannt.

2. Verfahren nach Anspruch 1, bei dem die Silberpaste einen Glasanteil aufweist.

3. Verfahren nach einem der vorhergehenden Ansprüche, bei dem die Silberpaste einen Polymeranteil aufweist.

4. Verfahren nach einem der vorhergehenden Ansprüche, bei dem Silber aus den Außenelektroden (3) während des Einbrennens der Silberpaste in die Innenelektroden (2) eindiffundiert.

5. Verfahren nach einem der vorhergehenden Ansprüche, bei dem Palladium aus den Innenelektroden (2) während des Einbrennens der Silberpaste in die Außenelektroden (3) eindiffundiert.

6. Verfahren nach einem der vorhergehenden Ansprüche, bei dem die Innenelektroden (2) des Vielschichtbauelements (1) nach dem Sintern einen Palladiumanteil von 20 Gew.% aufweisen.

## Claims

1. Method for producing a multi-layer component (1) by the following method steps:
- a stack of green sheets, to which inner electrodes (2) comprising palladium oxide have been applied, is provided,
- the stack is sintered, with palladium oxide being converted into palladium during the sintering process,
- the sintered stack is provided on two or more sides with a silver paste for the outer electrodes (3),
- and the silver paste is fired into the sintered green stack in a further temperature step.

2. Method according to Claim 1, in which the silver paste has a glass content.

3. Method according to either of the preceding claims, in which the silver paste has a polymer content.

4. Method according to one of the preceding claims, in which silver from the outer electrodes (3) diffuses into the inner electrodes (2) as the silver paste is being fired in.

5. Method according to one of the preceding claims, in which palladium from the inner electrodes (2) diffuses into the outer electrodes (3) as the silver paste is being fired in.

6. Method according to one of the preceding claims, in which the inner electrodes (2) of the multi-layer component (1) have a palladium content of 20% by weight after the sintering process.

## Revendications

1. Procédé de fabrication d'un composant multicouche (1), le procédé comprenant les étapes de traitement suivantes :
- préparation d'une pile de feuilles crues avec un oxyde de palladium sur lequel sont appliquées des électrodes intérieures (2),
- frittage de la pile,
- conversion de l'oxyde de palladium en palladium pendant l'opération de frittage,
- application d'une pâte d'argent prévue pour les électrodes extérieures (3) sur deux ou plusieurs côtés de la pile frittée et
- cuisson de la pâte d'argent dans la pile crue frittée au cours d'une autre étape de traitement thermique.

2. Procédé selon la revendication 1, dans lequel la pâte d'argent présente une teneur en verre.

3. Procédé selon l'une des revendications précédentes, dans lequel la pâte d'argent présente une teneur en polymère.

4. Procédé selon l'une des revendications précédentes, dans lequel de l'argent diffuse depuis les électrodes extérieures (3) jusque dans les électrodes intérieures (2) pendant la cuisson de la pâte d'argent.

5. Procédé selon l'une des revendications précédentes, dans lequel du palladium diffuse depuis les électrodes extérieures (3) jusque dans les électrodes intérieures (2) pendant la cuisson de la pâte d'argent.

6. Procédé selon l'une des revendications précédentes, dans lequel les électrodes intérieures (2) du composant multicouche (1) présentent après le frittage une teneur en palladium de 20 % en poids.
